# EUROPEAN PATENT SPECIFICATION

(11) **EP 1 559 747 B1**
(45) Date of publication and mention of the grant of the patent: **21.03.2007**
(21) Application number: 03756693.2
(22) Date of filing: 17.10.2003
(51) Int. Cl.: C08L 67/00, C08L 51/04, C08L 55/02, C08L 51/00

(54) **AMORPHOUS POLYESTER RESIN COMPOSITION**
AMORPHE POLYESTERHARZZUSAMMENSETZUNG
COMPOSITION DE RESINE DE POLYESTER AMORPHE

(30) Priority: 24.10.2002 JP 2002309756
(43) Date of publication of application: 03.08.2005
(73) Proprietor: KANEKA CORPORATION, Osaka-shi, Osaka 530-8288 (JP)
(72) Inventor: ONUMA, Hisashi, B-2260, Westerlo-Oevel (BE); SHIMIZU, Michio, Takasago-shi, Hyogo 676-0801 (JP); YAMAGUCHI, Katsumi, Kobe-shi, Hyogo 655-0039 (JP); KADOKURA, Mamoru, Himeji-city, Hyogo 671-1242 (JP)
(74) Representative: Vossius & Partner
(86) International application number: PCT/JP2003/013341
(87) International publication number: WO 2004/037923

(56) References cited:
- EP-A- 0 545 377
- EP-A- 0 985 692
- EP-A- 1 095 982
- EP-A- 1 125 983
- JP-A- 2002 155 194
- US-A- 4 173 600
- US-A- 4 180 494
- US-A- 4 264 678
- US-A- 4 431 772
- US-A- 4 508 876

## Description

The present invention relates to an amorphous polyester resin composition. More specifically, the present invention relates to a novel amorphous polyester resin composition, which contains a core-shell modifier for impact resistance and is excellent in transparency, impact resistance, and whitening properties at a low stress.

Amorphous polyester resin compositions are excellent in transparency, mechanical properties, and gas barrier properties, and are widely used mainly as packaging materials such as sheets. However, because of complication of the form of products and requirement for higher properties, it is strongly desired that such amorphous polyester resin compositions have higher transparency, impact resistance, and whitening properties at a low stress.

To date, as means for improving the impact resistance of a polyester resin composition while keeping the transparency thereof, Carson et al. have disclosed an impact resistance improving agent that achieves transparency and high notched-Izod impact resistance in Japanese Patent Laid-Open No. 6-65331, for example.

The impact resistance improving agent of Carson et al. involves a core-shell polymer, which comprises a core consisting of rubber-like polymers of diene and vinyl aromatic monomers, and a shell consisting of vinyl aromatic monomers and monomers having hydroxyl groups. However, since the ratio of diene monomers in a elastic rubber part is low in a core composition, this impact resistance improving agent has not yet achieved sufficient effects of practically improving impact resistance.

In Japanese Patent Laid-Open No. 2000-34327, Troy et al. have disclosed, as an agent for improving the impact resistance of an amorphous aromatic polyester, a core-shell polymer, which comprises a core consisting of rubber-like polymers of diene and aromatic vinyl, an intermediate stage mainly consisting of vinyl aromatic monomers, and a shell consisting of monomers having hydroxyl groups and vinyl aromatic monomers. However, in the case of the impact resistance improving agent of Troy et al. also, the ratio of diene monomers in a rubber elastic body is low in a core composition, and thus, the improving agent has not yet achieved sufficient effects of practically improving impact resistance. The impact resistance improving agent of Troy et al. provides transparency and significantly improved impact resistance to an amorphous aromatic polyester. However, an improving agent that provides well-balanced impact resistance and transparency is still required.

In Japanese Patent Laid-Open No. 2002-212242, Onuma et al. have disclosed, as an agent for improving the impact resistance of an amorphous aromatic polyester, a core-shell polymer, which comprises a core consisting of rubber-like polymers of butadiene monomers and aromatic vinyl monomers, an inner layer shell consisting of aromatic vinyl monomers and (meth) acrylic ester monomers containing hydroxyl groups or alkoxy groups, and an outermost layer shell mainly consisting of aromatic vinyl monomers. The impact resistance improving agent of Onuma et al. has great effects of improving high transparency and high impact resistance. However, its whitening properties at a low stress are still required to be improved.

It is an object of the present invention to provide an amorphous polyester resin composition, which exhibits high transparency, high impact resistance and is improved in whitening properties at a low stress, and particularly in whitening resistance under stress in sheet- and film-form molded products.

As a result of intensive studies directed towards achieving the aforementioned object, the present inventors have found that an amorphous polyester resin composition having high transparency and high impact resistance and satisfying whitening resistance under stress can be provided by mixing a core-shell modifier for impact resistance, which comprises, as a core, a bilayer aromatic vinyl-butadiene based copolymer comprising an innermost layer having a higher content in weight of a cross-linking monomer and has a refractive index between 1.55 and 1.60, thereby completing the present invention.

That is to say, the present invention relates to a substantially amorphous polyester resin composition (claim 1), which comprises:
1 to 40 parts by weight of a core-shell modifier for impact resistance (1), which has a refractive index between 1. 55 and 1.60, and 60 to 99 parts by weight of at least one aromatic polyester or co-polyester (2) [100 parts by weight of the sum of (1) and (2)], the composition comprising 15 to 85 parts by weight of a core (A) obtained by copolymerizing 65% to 95% by weight of a butadiene monomer, 5% to 35% by weight of an aromatic vinyl monomer, 0% to 10% by weight of a vinyl monomer capable of copolymerizing with these monomers, and 0.01% to 5% by weight of a cross-linking monomer and 15 to 85 parts by weight of a shell (B) [100 parts by weight of the sum of (A) and (B)], wherein said core (A) comprises 10 to 50 parts by weight of an inner layer core (A-1) obtained by copolymerizing 25% to 100% by weight of a butadiene monomer, 0% to 75% by weight of an aromatic vinyl monomer, 0% to 40% by weight of a vinyl monomer capable of copolymerizing with these monomers, and 0.1% to 10% by weight of a cross-linking monomer, and 5 to 75 parts by weight of an outer layer core (A-2) obtained in the presence of the inner layer core (A-1) by copolymerizing 50% to 100% by weight of a butadiene monomer, 0% to 50% by weight of an aromatic vinyl monomer, 0% to 40% by weight of a vinyl monomer capable of copolymerizing with these monomers, and 0% to 2% by weight of a cross-linking monomer, and said shell (B) is obtained by copolymerizing one or more vinyl monomers (a mixture).

The present invention also relates to the substantially amorphous polyester resin composition according to claim 1 (claim2), wherein, with regard to the core (A) in the core-shell modifier for impact resistance (1), the ratio of a cross-linking monomer in the inner layer core (A-1) is higher than that in the outer layer core (A-2).

The present invention further relates to the substantially amorphous polyester resin composition according to claim 1 or 2 (claim 3), wherein the core-shell modifier for impact resistance (1) has a refractive index between 1.55 and 1.60, and comprises 15 to 85 parts by weight of the core (A), and 15 to 85 parts by weight of the shell (B) obtained by copolymerizing 10 to 80 parts by weight of an inner layer shell (B-1) obtained by copolymerizing 60% to 98% by weight of an aromatic vinyl monomer, 2% to 40% by weight of (meth)acrylic ester monomer having a hydroxyl or alkoxy group, and 0% to 20 % by weight of a copolymerizable vinyl monomer, and 5 to 20 parts by weight of an outermost layer shell (B-2) obtained by copolymerizing 50% to 100% by weight of an aromatic vinyl monomer and 0% to 50% by weight of a copolymerizable vinyl monomer [100 parts by weight of the sum of (A) and (B)].

The present invention further relates to a molded product (claim 4), which is produced from the composition according to any one of claims 1 to 3 under conditions where at least one aromatic polyester or co-polyester (2) is maintained in an amorphia form.

The ratio between a core (A) and a shell (B) in a core-shell modifier for impact resistance (1) used in the present invention is 15 to 85 parts by weight of the core (A) and 15 to 85 parts by weight of the shell (B), preferably 20 to 80 parts by weight of the core (A) and 20 to 80 parts by weight of the shell (B), and more preferably 30 to 70 parts by weight of the core (A) and 30 to 70 parts by weight of the shell (B). If the core (A) is less than 15 parts by weight and the shell (B) is more than 85 parts by weight, impact strength-improving ability tends to decrease. In contrast, if the core (A) is more than 85 parts by weight and the shell (B) is less than 15 parts by weight, a coating state with the shell becomes deteriorated, and it tends to cause an insufficient dispersion of the core-shell modifier for impact resistance in the aromatic polyester or co-polyester (2).

Core (A) in the core-shell modifier for impact resistance (1) used in the present invention is obtained by polymerizing a monomer mixture comprising 65% to 95% by weight, preferably 65% to 90% by weight, and more preferably 65% to 80% by weight of a butadiene monomer, 5% to 35% by weight, preferably 10% to 35% by weight, and more preferably 20% to 35% by weight of an aromatic vinyl monomer, 0% to 10% by weight of a vinyl monomer capable of copolymerizing with these monomers, and 0.01% to 5% by weight of a cross-linking monomer.

The use of such a butadiene monomer is necessary in terms of impact strength. If the ratio of butadiene is less than 65% by weight in the core (A), impact strength-improving ability tends to decrease. If it exceeds 95% by weight, it is likely that the refractive index decreases and transparency tends to decrease.

Aromatic vinyl monomer is a compound having a vinyl double bond and one or more benzene nuclei in a single molecule. Such an aromatic vinyl monomer may specifically be styrene, α-methylstyrene, 2-methylstyrene, 3-methylstyrene, 4-methylstyrene, 4-ethylstyrene, 2,5-dimethylstyrene, 4-methoxystyrene, 4-ethoxystyrene, 4-propoxystyrene, 4-butoxystyrene, chlorostyrene, dichlorostyrene, trichlorostyrene, vinyltoluene, bromostyrene, dibromostyrene, tribromostyrene, vinylnaphthalene, isopropenylnaphthalene, isopropenylbiphenyl, and divinylbenzene, but is not limited thereto. The use of an aromatic vinyl monomer is necessary because it heightens the refractive index of a rubber particle, thereby bringing it close to the refractive index of an amorphous polyester resin composition. However, if the ratio of such an aromatic vinyl monomer exceeds 35% by weight in the core (A), impact strength-improving ability tends to decrease, and if it is less than 5% by weight, the refractive index decreases and transparency tends to decrease.

A vinyl monomer capable of copolymerizing with the aforementioned monomers may be: (meth)acrylic alkyl esters having alkyl groups containing 1 to 8 carbon atoms, such as methyl (meth)acrylate, ethyl (meth)acrylate, or butyl (meth)acrylate; vinyl cyanide compounds such as (meth)acrylonitrile, vinylidene cyanate, or 1,2-dicyanoethylene; (meth)acrylic acid; phenyl (meth)acrylate; and maleimide compounds, but is not limited thereto.

A cross-linking monomer may be compounds having two or more polymer functional groups in a molecule thereof, such as allyl methacrylate, divinylbenzene, diallyl phthalate, or ethyleneglycol dimethacrylate, but is not limited thereto. The use of a cross-linking monomer is necessary in terms of whitening properties at a low stress and transparency. However, if the ratio of a cross-linking monomer exceeds 5% by weight in the core (A), impact strength-improving ability tends to decrease. If it is less than 0.01% by weight, whitening resistance under stress tends to deteriorate.

The ratio between an inner layer core (A-1) and an outer layer core (A-2) in the core (A) in the core-shell modifier for impact resistance (1) is preferably 10 to 50 parts by weight of the inner layer core (A-1) and 5 to 75 parts by weight of the outer layer core (A-2) [15 to 85 parts by weight of the sum of (A-1) and (A-2)].

The inner layer core (A-1) is obtained by polymerizing a monomer mixture comprising 25% to 100% by weight, preferably 30% to 90% by weight, and more preferably 40% to 80% by weight of a butadiene monomer, 0% to 75% by weight, preferably 10% to 70% by weight, and more preferably 20% to 60% by weight of an aromatic vinyl monomer, 0% to 40% by weight of a vinyl monomer capable of copolymerizing with these monomers, and 0.1% to 10% by weight, preferably 0.1% to 5% by weight, and more preferably 0.3% to 3% by weight of a cross-linking monomer. For polymerization of the inner layer core (A-1), a method of feeding a monomer mixture is not particularly limited. Methods such as the bulk addition method, the continuous one-step addition method, or the two-step addition method are applied.

The use of a butadiene monomer is necessary in terms of strength. If the ratio of butadiene monomer is less than 25% by weight in the inner layer core (A-1), impact strength-improving ability tends to decrease.

Aromatic vinyl monomer is a compound having a vinyl double bond and one or more benzene nuclei in a single molecule and may specifically be styrene, alpha-methylstyrene, 2-methylstyrene, 3-methylstyrene, 4-methylstyrene, 4-ethylstyrene, 2,5-dimethylstyrene, 4-methoxystyrene, 4-ethoxystyrene, 4-propoxystyrene, 4-butoxystyrene, chlorostyrene, dichlorostyrene, trichlorostyrene, vinyltoluene, bromostyrene, dibromostyrene, tribromostyrene, vinylnaphthalene, isopropenylnaphthalene, isopropenylbiphenyl, and divinylbenzene, but is not limited thereto. The use of an aromatic vinyl monomer is necessary because it heightens the refractive index of a rubber particle, thereby bringing it close to the refractive index of an amorphous polyester resin composition. However, if the ratio of such an aromatic vinyl monomer exceeds 75% by weight in the inner layer core (A-1), impact strength-improving ability tends to decrease.

A vinyl monomer capable of copolymerizing with the aforementioned monomers may be: (meth)acrylic alkyl esters having alkyl groups containing 1 to 8 carbon atoms, such as methyl (meth)acrylate, ethyl (meth)acrylate, or butyl (meth)acrylate; vinyl cyanide compounds such as (meth)acrylonitrile, vinylidene cyanate, or 1,2-dicyanoethylene; (meth)acrylic acid; phenyl (meth)acrylate; and maleimide compounds, but is not limited thereto.

A cross-linking monomer may be compounds having two or more polymer functional groups in a molecule thereof, such as allyl methacrylate, divinylbenzene, diallyl phthalate, or ethyleneglycol dimethacrylate, but is not limited thereto. The use of a cross-linking monomer is necessary in terms of whitening resistance under stress and transparency. However, if the ratio of a cross-linking monomer exceeds 10% by weight in the inner layer core (A-1), impact strength-improving ability tends to decrease. If it is less than 0.1% by weight, whitening resistance under stress tends to deteriorate.

The outer layer core (A-2) is obtained by polymerizing a monomer mixture comprising 50% to 100% by weight, preferably 60% to 100% by weight, and more preferably 70% to 100% by weight of a butadiene monomer, 0% to 50% by weight, preferably 0% to 40% by weight, and more preferably 0% to 30% by weight of an aromatic vinyl monomer, 0% to 40% by weight of a vinyl monomer capable of copolymerizing with these monomers, and 0% to 2% by weight of a cross-linking monomer. For polymerization of the outer layer core (A-2), a method of feeding a monomer mixture is not particularly limited. Methods such as the bulk addition method, the continuous one-step addition method, or the two-step addition method are applied.

The use of a butadiene monomer is necessary in terms of strength. If the ratio of a butadiene monomer is less than 50% by weight in the outer layer core (A-2), impact strength-improving ability tends to decrease.

Aromatic vinyl monomer is a compound having a vinyl double bond and one or more benzene nuclei in a single molecule and may specifically be styrene, alpha-methylstyrene, 2-methylstyrene, 3-methylstyrene, 4-methylstyrene, 4-ethylstyrene, 2,5-dimethylstyrene, 4-methoxystyrene, 4-ethoxystyrene, 4-propoxystyrene, 4-butoxystyrene, chlorostyrene, dichlorostyrene, trichlorostyrene, vinyltoluene, bromostyrene, dibromostyrene, tribromostyrene, vinylnaphthalene, isopropenylnaphthalene, isopropenylbiphenyl, and divinylbenzene, but is not limited thereto. The use of an aromatic vinyl monomer is necessary because it heightens the refractive index of a rubber particle, thereby bringing it close to the refractive index of an amorphous polyester resin composition. However, if the ratio of such an aromatic vinyl monomer exceeds 50% by weight in the outer layer core (A-2), impact strength-improving ability tends to decrease.

A vinyl monomer capable of copolymerizing with the aforementioned monomers may be: (meth)acrylic alkyl esters having alkyl groups containing 1 to 8 carbon atoms, such as methyl (meth)acrylate, ethyl (meth)acrylate, or butyl (meth)acrylate; vinyl cyanide compounds such as (meth)acrylonitrile, (meth)acrylic acid, phenyl (meth)acrylate, vinylidene cyanate, or 1,2-dicyanoethylene; and maleimide compounds, but is not limited thereto. Examples of a cross-linking monomer may include compounds having two or more polymer functional groups in a molecule thereof, such as allyl methacrylate, divinylbenzene, diallyl phthalate, or ethyleneglycol dimethacrylate, but is not limited thereto. The use of a cross-linking monomer is necessary in terms of whitening properties at a low stress and transparency. However, if the ratio of a cross-linking monomer exceeds 2% by weight in the outer layer core (A-2), impact strength-improving ability tends to decrease. In the core (A) in the used (1) used in the present invention, in terms of improvement of whitening resistance under stress, it is preferable that the ratio of a cross-linking monomer in the inner layer core (A-1) should be adjusted to be higher than that in the outer layer core (A-2).

The shell (B) in the core-shell modifier for impact resistance (1) used in the present invention is obtained by copolymerizing one or more vinyl monomers (a mixture) in the presence of the core (A). For polymerization of the shell (B), a method of feeding a monomer mixture is not particularly limited. Methods such as the bulk addition method, the continuous one-step addition method, or the two-step addition method are applied.

A vinyl monomer used for the shell (B) may be: (i) aromatic vinyl monomers such as styrene, α-methylstyrene, 2-methylstyrene, 3-methylstyrene, 4-methylstyrene, 4-ethylstyrene, 2,5-dimethylstyrene, 4-methoxystyrene, 4-ethoxystyrene, 4-propoxystyrene, 4-butoxystyrene, chlorostyrene, dichlorostyrene, trichlorostyrene, vinyltoluene, bromostyrene, dibromostyrene, tribromostyrene, vinylnaphthalene isopropenylnaphthalene, isopropenylbiphenyl, or divinylbenzene; (ii) (meth)acrylic alkyl esters having alkyl groups containing 1 to 8 carbon atoms, such as methyl (meth) acrylate, ethyl (meth) acrylate, or butyl (meth)acrylate; (iii) monomers comprising (meth)acrylic ester containing a hydroxyl or alkoxy group, which include hydroxy acrylate such as hydroxyethyl acrylate or hydroxypropyl acrylate, hydroxy methacrylate such as hydroxyethyl methacrylate or hydroxypropyl methacrylate, alkoxy acrylate such as methoxyethyl acrylate or ethoxyethyl acrylate, and alkoxy methacrylate such as methoxyethyl methacrylate or ethoxyethyl methacrylate; and (iv) vinyl cyanide compounds such as (meth)acrylonitrile, vinylidene cyanate, or 1,2-dicyanoethylene, phenyl (meth)acrylate, (meth)acrylic acid, and maleimide compounds.

Among them, the shell (B) in the core-shell modifier for impact resistance (1) preferably consists of an inner layer shell (B-1) and an outer layer shell (B-2) in terms of transparency and impact resistance strength expression. The ratio between the inner layer shell (B-1) and the outer layer shell (B-2) is preferably 10 to 80 parts by weight of the inner layer shell (B-1) and 5 to 20 parts by weight of the outer layer shell (B-2) [15 to 85 parts by weight of the sum of (B-1) and (B-2)].

The inner layer shell (B-1) is preferably obtained by polymerizing a monomer mixture comprising 60% to 98% by weight, preferably 65% to 98% by weight, and more preferably 70% to 95% by weight of an aromatic vinyl monomer, 2% to 40% by weight, preferably 2% to 35% by weight, and more preferably 5% to 30% by weight of a (meth) acrylic ester monomer having a hydroxyl or alkoxy group, and 0% to 20% by weight of a copolymerizable vinyl monomer. For polymerization of the inner layer shell (B-1), a method of feeding a monomer mixture is not particularly limited. Methods such as the bulk addition method, the continuous one-step addition method, or the two-step addition method are applied.

Aromatic vinyl monomer forming the inner layer shell (B-1) is a compound having a vinyl double bond and one or more benzene nuclei in a single molecule. Specific examples of such an aromatic vinyl monomer may include styrene, α-methylstyrene, 2-methylstyrene, 3-methylstyrene, 4-methylstyrene, 4-ethylstyrene, 2,5-dimethylstyrene, 4-methoxystyrene, 4-ethoxystyrene, 4-propoxystyrene, 4-butoxystyrene, chlorostyrene, dichlorostyrene, trichlorostyrene, vinyltoluene, bromostyrene, dibromostyrene, tribromostyrene, vinylnaphthalene, isopropenylnaphthalene, and isopropenylbiphenyl, but is not limited thereto. The use of an aromatic vinyl monomer is preferable in terms of transparency, because it heightens the refractive index of the shell (B), thereby bringing it close to the refractive index of an aromatic polyester or co-polyester (2). However, if the ratio of such an aromatic vinyl monomer exceeds 98% by weight in the inner layer shell (B-1), surface affinity with the aromatic polyester or co-polyester (2) decreases, and transparency and impact strength-improving ability thereby tends to decrease. If it is less than 60% by weight, a refractive index decreases, resulting in a decrease in transparency.

A monomer comprising a (meth)acrylic ester containing a hydroxyl or alkoxy group may be hydroxy acrylate such as hydroxyethyl acrylate or hydroxypropyl acrylate, hydroxy methacrylate such as hydroxyethyl methacrylate or hydroxypropyl methacrylate, alkoxy acrylate such as methoxyethyl acrylate or ethoxyethyl acrylate, and alkoxy methacrylate such as methoxyethyl methacrylate or ethoxyethyl methacrylate, but is not limited thereto. The use of a monomer comprising a (meth)acrylic ester containing a hydroxyl or alkoxy group for the inner layer shell (B-1) is preferable for improving surface affinity with the aromatic polyester or co-polyester (2). If the ratio of a monomer comprising a (meth)acrylic ester containing a hydroxyl or alkoxy group exceeds 40% by weight in the inner layer shell (B-1), a refractive index decreases, and transparency thereby tends to decrease. If it is less than 2% by weight, surface affinity with the aromatic polyester or co-polyester (2) decreases, and transparency and strength-expressing power thereby tend to decrease.

A copolymerizable vinyl monomer may be: (meth)acrylic alkyl esters having alkyl groups containing 1 to 8 carbon atoms, such as methyl (meth) acrylate, ethyl (meth) acrylate, or butyl (meth)acrylate; vinyl cyanide compounds such as (meth)acrylonitrile, vinylidene cyanate, or 1,2-dicyanoethylene; (meth)acrylic acid; phenyl (meth)acrylate; and maleimide compounds, but is not limited thereto.

The outer layer shell (B-2) is preferably obtained by polymerizing a monomer mixture comprising 50% to 100% by weight, preferably 55% to 100% by weight, and more preferably 60% to 100% by weight of an aromatic vinyl monomer, and 0% to 50% by weight of a copolymerizable monomer. For polymerization of the outer layer shell (B-2), a method of feeding a monomer mixture is not particularly limited. Methods such as the bulk addition method, the continuous one-step addition method, or the two-step addition method are applied.

An aromatic vinyl monomer forming the outer layer shell (B-2) may be styrene, α-methylstyrene, 2-methylstyrene, 3-methylstyrene, 4-methylstyrene, 4-ethylstyrene, 2,5-dimethylstyrene, 4-methoxystyrene, 4-ethoxystyrene, 4-propoxystyrene, 4-butoxystyrene, chlorostyrene, dichlorostyrene, trichlorostyrene, vinyltoluene, bromostyrene, dibromostyrene, tribromostyrene, vinylnaphthalene, isopropenylnaphthalene, and isopropenylbiphenyl, but is not limited thereto. The use of an aromatic vinyl monomer is preferable for preventing autoagglutination of the core-shell modifier for impact resistance (1) in the aromatic polyester or co-polyester (2). Moreover, it is also preferable in terms of transparency, because it brings the refractive index of the shell close to the refractive index of the aromatic polyester or co-polyester (2).

A copolymerizable vinyl monomer may be: (meth)acrylic alkyl esters having alkyl groups containing 1 to 8 carbon atoms, such as methyl (meth) acrylate, ethyl (meth) acrylate, or butyl (meth) acrylate; (meth) acrylic acid; phenyl (meth)acrylate; maleimide compounds; and vinyl cyanide compounds such as (meth)acrylonitrile, vinylidene cyanate, or 1,2-dicyanoethylene. However, examples are not limited thereto.

The refractive index of the core-shell modifier for impact resistance (1) used in the present invention should be brought close to the refractive index of the target amorphous polyester resin composition. Thus, the above refractive index is preferably between 1.55 and 1.60, and more preferably between 1.56 and 1.58.

The term "refractive index" is used in the present invention to mean an actual measurement value obtained by the following method. That is to say, hydrochloric acid was added to a part of the obtained latex for coagulation, and the thus coagulated product was subjected to heat treatment at 70°C. The resultant product was washed, dehydrated, and dried, so as to obtain dry powders. The obtained powders were then fused using a heat roll, followed by hot press molding, thereby resulting in a thickness of 1 mm, so as to obtain a specimen used for refractive index measurement. Thereafter, the refractive index of the specimen was measured at 23°C using a refractometer (Abbe 2T, manufactured by Atago). However, as a guideline for designing formula, it is realistic to make calculations using the values of refractive indexes described in publications such as Polymer Handbook 4^{th} Edition (John Willy & Sons Inc., 1999) and to set a composition, so as to carry out polymerization.

The weight-average particle size of the core-shell modifier for impact resistance (1) used in the present invention is not particularly limited. It is preferably between 0.05 and 0.5 µm, and more preferably between 0.07 and 0.3 µm. When the weight-average particle size of the core-shell modifier for impact resistance (1) is shorter than 0.05 µm, impact strength-improving ability tends to become small. In contrast, when it exceeds 0.5 µm, transparency tends to significantly decrease. Examples of a method of adjusting the weight-average particle size of the core-shell modifier for impact resistance (1) may include: a method of using a water-soluble electrolyte to allow the agent to agglutinate and increase during graft polymerization, which is disclosed in Japanese Patent Publication No. 43-12158; and a method of using acid radical-containing latex consisting of a copolymer of (meth) acrylic ester and unsaturated acid, which is disclosed in Japanese Patent Laid-Open No. 8-012704.

Core-shell modifier for impact resistance (1) used in the present invention can be obtained by emulsion polymerization, suspension polymerization, solution polymerization, and the like. Of these, emulsion polymerization is preferable in terms of industrial productivity. When core-shell modifier for impact resistance (1) is produced by emulsion polymerization, known emulsification methods and polymerization procedures are applied.

Aromatic polyester or co-polyester (2) modified by the present invention is a resin, crystallinity of which is not substantially observed, or crystallinity of which is low enough not to affect transparency although it has crystallinity.

The aromatic polyester or co-polyester (2) modified by the present invention may be: polyalkylene terephthalates such as polyethylene terephthalate (PET) or polypentylene terephthalate; alkylene naphthalene-dicarboxylates such as poly(ethylene naphthalene-2,6-dicarboxylate); and aromatic polyesters or aromatic co-polyesters, which comprise a unit derived from at least one aliphatic diol or cyclic aliphatic diol, or the combination of aliphatic diol with cyclic aliphatic diol as a diol component, and a unit derived from at least one aromatic dibasic acid as a dicarboxylic acid component, such as PETG from Eastman Kodak (e.g. poly(ethylene-CO-1,4-cyclohexanedimethylene terephthalate)). Such an aromatic polyester or aromatic co-polyester can be obtained by polycondensation of a diol component (e.g. ethylene glycol, 1,4-cyclohexanedimethanol, etc.) and an aromatic dicarboxylic acid component (e.g. terephthalic acid, isophthalic acid, nathphalene dicarboxylate, etc.). These components can be used singly, or in combination of two or more components as necessary.

The mixed amount of the core-shell modifier for impact resistance (1) and the aromatic polyester or co-polyester (2) is different depending on purposes. It is appropriately 1 to 40 parts by weight of the core-shell modifier for impact resistance (1) and 60 to 99 parts by weight of the aromatic polyester or co-polyester (2) [100 parts by weight of the sum of (1) and (2)], preferably 1 to 30 parts by weight of the core-shell modifier for impact resistance (1) and 70 to 99 parts by weight of the aromatic polyester or co-polyester (2), and more preferably 5 to 25 parts by weight of the core-shell modifier for impact resistance (1) and 75 to 95 parts by weight of the aromatic polyester or co-polyester (2). If the mixed amount of the core-shell modifier for impact resistance (1) is less than 1 part by weight, it is likely that favorable impact resistance would not be achieved. In contrast, if it exceeds 40 parts by weight, transparency tends to decrease.

A method of producing the resin composition of the present invention is not particularly limited, and known methods can be adopted. For example, the following method can be adopted. The aromatic polyester or co-polyester (2) and the core-shell modifier for impact resistance (1) have previously been produced, separately. Thereafter, both products are mixed using a Henschel mixer or tumbler. The obtained mixture is then melted and blended using a single-screw extruder, double-screw extruder, Banbury mixer, heat roll, or the like, so as to obtain a resin composition.

The composition of the present invention may comprise not only an aromatic polyester or co-polyester and a core-shell modifier for impact resistance, but also commonly used additives such as inorganic fillers, pigments, antioxidants, heat stabilizers, light-resistance improving agents, ultraviolet absorbers, lubricating agents, plasticizers, mold releasing agents, antistatic agents, sliding property improving agents, and coloring agents, as appropriate.

In the present invention, products are preferably produced under conditions where the aromatic polyester or co-polyester (2) is maintained in an amorphia form or in an amorphous state. A small degree of crystallization is allowable. In the case of PET, as conditions for maintaining the polyester or co-polyester in an amorphia form or in an amorphous state, a composition is processed at a processing temperature between 270°C and 290°C, and after completion of the processing, it is uniformly quenched at a temperature between 60°C and 75°C before crystallization, so as to maintain it in an amorphia form or in an amorphous state, for example. Moreover, in the case of PET-G, a composition is processed at a processing temperature between 200°C and 260°C, and after completion of the processing, it is uniformly quenched at a temperature between 60°C and 75°C, for example. When crystallization substantially occurs in the production process, the obtained product becomes opaque and brittle.

The amorphous polyester resin composition of the present invention exhibits excellent whitening properties at a low stress and is improved in impact resistance with little impair in the optical properties inherent in amorphous polyester resin. This amorphous polyester resin composition is industrially greatly useful, when it is used for sheets, films, etc.

The present invention will be described more in detail in the following examples.

Evaluation of various types of physical properties in examples and comparative examples is carried out by the following methods. In addition, the terms "part" and "%" represent "part by weight" and "% by weight," respectively, unless otherwise specified.

### (Measurement of weight-average particle size)

Latex obtained in each of examples and comparative examples was diluted with water. Thereafter, the weight-average particle size of the diluted product was measured using a micro-track particle size distribution measuring apparatus (model: 9230 UPA; manufactured by Nikkiso Co., Ltd.).

### (Refractive index of core-shell modifier for impact resistance)

In order to measure a refractive index, hydrochloric acid was added to latex obtained in each of examples and comparative examples for coagulation, and the resultant product was then subjected to heat treatment, washing, dehydration, and drying, so as to obtain powders. Thereafter, the powders were melted and blended at 150°C using a heat roll (8-inch roll; manufactured by Kansai Roll Co. , Ltd.), so as to obtain a sheet. The obtained sheet was then pressed with a pressing machine (F Hydraulic Press; Shinto Metal Industries, Ltd.) under conditions consisting of a temperature of 160°C, a press pressure of 100 kg/cm², and a period of time of 15 minutes, so as to obtain a specimen with a thickness of 1 mm used for measurement of transparency. Thereafter, the refractive index of the specimen was measured at 23°C with an Abbe refractometer (2T; manufactured by Atago).

### (Molding of press product)

15 parts of a core-shell modifier for impact resistance obtained in each of examples and comparative examples and 1 part of a lubricating agent (GTL-02; manufactured by Nitto Kasei Co., Ltd.) were added to 100 parts of an amorphous aromatic co-polyester resin (Easter 6763; manufactured by Eastman Kodak), and these components were preliminarily mixed. Thereafter, the mixture was melted and blended at 170°C using a heat roll (8-inch roll; manufactured by Kansai Roll Co., Ltd.), so as to obtain a sheet. The obtained sheet was then pressed with a pressing machine (F Hydraulic Press; Shinto Metal Industries, Ltd.) under conditions consisting of a temperature of 120°C, a press pressure of 100 kg/cm², and a period of time of 15 minutes, so as to obtain a specimen with a thickness of 3 mm used for measurement of transparency (300 × 400 × 3 mm thickness) and a specimen (with a thickness of 3 mm) used for measurement of Izod impact strength.

### (Izod impact strength of press product)

Notched Izod impact strength was measured at 23°C in accordance with JIS K 7110.

### (Transparency of press product)

Total light transmission and clouding degree were measured at 23°C with a color-difference turbidimeter (Σ80; manufactured by Nippon Denshoku Industries, Ltd.) in accordance with ASTM D 1003.

### (Molding of sheet)

15 parts of a core-shell modifier for impact resistance obtained in each of examples and comparative examples were added to 100 parts of an amorphous aromatic co-polyester resin (Easter 6763; manufactured by Eastman Kodak), and these components were preliminarily mixed. Thereafter, the mixture was melted and blended at a cylinder temperature of 240°C using a 44 mmφ double-screw extruder (TEX-44; manufactured by The Japan Steel Works, Ltd.), so as to obtain a pellet. The obtained pellet was then molded with a T-die extrusion sheet molding machine (Toyo Seiki) at a cylinder temperature of 200°C and a die temperature of 210°C, so as to obtain a sheet with a thickness of 0.3 mm. A specimen used for measurement of transparency (300 × 400 × 0.3 mm thickness) and a specimen used for evaluation of whitening resistance under stress (300 × 400 × 0.3 mm thickness) were obtained from the obtained sheet with a thickness of 0.3 mm.

### (Transparency of sheet)

Total light transmission and clouding degree were measured at 23°C with a color-difference turbidimeter (Σ80; manufactured by Nippon Denshoku Industries, Ltd.) in accordance with ASTM D 1003.

### (Whitening resistance under stress of sheet)

A specimen used for evaluation of whitening resistance under stress was sandwiched between a dart (a length of 100 mm, 9.4 mmφ, tip R = 3/16) and a pillow (a height of 50 mm, a dip of 4.8 mm, R = 3/16), and an anchor with a weight of 1 Kgf was dropped thereto from a height of 50 mm from the top of the dart. Thus, an anchor drop test was carried out. The whitening L value of a portion that had been whitened by receiving impact was measured with a color-difference turbidimeter (Σ80; manufactured by Nippon Denshoku Industries, Ltd.) according to the standard white board measurement method.

### (Example 1)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 47.7 parts of butadiene, 22.7 parts of styrene, and 0.07 parts of paramenthan hydroperoxide were added to a polymerization container equipped with a stirrer, followed by polymerization at 50°C for 4 hours. Thereafter, 29.6 parts of butadiene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex (a) with a polymerization conversion rate of 99% and a weight-average particle size of 0.07 µm was prepared.

132 parts of the above described rubber latex (a) (solid contents: 44 parts), 200 parts of pure water, 0.001 part of ferrous sulfate, 0.004 parts of disodium ethylenediaminetetraacetate, 0.2 parts of sodium formaldehydesulfoxylate, 16 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C, so as to prepare an outer layer shell. Thus, a core-shell modifier for impact resistance latex was prepared. The obtained core-shell modifier for impact resistance latex was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Example 2)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 19.2 parts of butadiene, 23.1 parts of styrene, and 0.07 parts of paramenthan hydroperoxide were added to a polymerization container equipped with a stirrer, followed by polymerization at 50°C for 4 hours. Thereafter, 46.2 parts of butadiene, 11.5 parts of styrene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization conversion rate of 99% and a weight-average particle size of 0.07 µm was prepared.

156 parts of the above described rubber latex (solid contents: 52 parts), 200 parts of pure water, 0.001 part of ferrous sulfate, 0.004 parts of disodium ethylenediaminetetraacetate, 0.2 parts of sodium formaldehydesulfoxylate, 8 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained core-shell impact resistance improving agent latex was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Example 3)

200. parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 12. 8 parts of butadiene, 10.6 parts of styrene, and 0.07 parts of paramenthan hydroperoxide were added to a polymerization container equipped with a stirrer, followed by polymerization at 50°C for 4 hours. Thereafter, 59.6 parts of butadiene, 17.0 parts of styrene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex (a) with a polymerization conversion rate of 99% and a weight-average particle size of 0.07 µm was prepared.

141 parts of the above described rubber latex (a) (solid contents: 47 parts), 200 parts of pure water, 0.001 part of ferrous sulfate, 0.004 parts of disodium ethylenediaminetetraacetate, 0.2 parts of sodium formaldehydesulfoxylate, 13 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Example 4)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 23.1 parts of butadiene, 34.6 parts of styrene, and 0.07 parts of paramenthan hydroperoxide were added to a polymerization container equipped with a stirrer, followed by polymerization at 50°C for 4 hours. Thereafter, 42.3 parts of butadiene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex (a) with a polymerization conversion rate of 99% and a weight-average particle size of 0.07 µm was prepared.

156 parts of the above described rubber latex (a) (solid contents: 52 parts), 200 parts of pure water, 0.001 part of ferrous sulfate, 0.004 parts of disodium ethylenediaminetetraacetate, 0.2 parts of sodium formaldehydesulfoxylate, 8 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for improving impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Example 5)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 26. 9 parts of butadiene, 19.2 parts of styrene, and 0.07 parts of paramenthan hydroperoxide were added to a polymerization container equipped with a stirrer, followed by polymerization at 50°C for 4 hours. Thereafter, 38.5 parts of butadiene, 15.4 parts of styrene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization conversion rate of 99% and a weight-average particle size of 0.07 µm was prepared.

156 parts of the above described rubber latex (solid contents: 52 parts), 200 parts of pure water, 0.001 part of ferrous sulfate, 0.004 parts of disodium ethylenediaminetetraacetate, 0.2 parts of sodium formaldehydesulfoxylate, 8 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Example 6)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0. 002 parts of ferrous sulfate, 1.0 part of divinylbenzene, 1.8 parts of partially hydrogenated tallow fatty acid sodium, 47.7 parts of butadiene, 22.7 parts of styrene, and 0.07 parts of paramenthan hydroperoxide were added to a polymerization container equipped with a stirrer, followed by polymerization at 50°C for 5 hours. Thereafter, 29.6 parts of butadiene, 0.0015 parts of disodium ethylenediaminetetraacetate, 0.001 part of ferrous sulfate, and 0.034 parts of fatty acid potassium monocarboxylate were further added thereto, followed by polymerization for 1 hour. Thus, a rubber latex with a polymerization conversion rate of 99% and a weight-average particle size of 0.07 µm was prepared.

132 parts of the above described rubber latex (solid contents: 44 parts), 200 parts of pure water, 0.001 part of ferrous sulfate, 0.004 parts of disodium tetraacetate, 0.2 parts of sodium formaldehydesulfoxylate, 6 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 15 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subj ected to heat treatment, washing, dehydration, and dried, so as to prepare a powdery core-shell modifier for impact resistance. The refractive index of the core-shell modifier for impact resistance was 1.565.

### (Example 7)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 0.3 parts of divinylbenzene, 1.8 parts of partially hydrogenated tallow fatty acid sodium, 47. 7 parts of butadiene, 22.7 parts of styrene, and 0.07 parts of paramenthan hydroperoxide were added to a polymerization container equipped with a stirrer, followed by polymerization at 50°C for 4 hours. Thereafter, 29.6 parts of butadiene, 0.0015 parts of disodium ethylenediaminetetraacetate, 0.001 part of ferrous sulfate, 0.7 parts of divinylbenzene, and 0.034 parts of fatty acid potassium monocarboxylate were further added thereto, followed by polymerization for 5 hours. Thus, a rubber latex with a polymerization conversion rate of 99% and a mean particle size of 0.07 µm was prepared.

132 parts of the above described rubber latex (solid contents: 44 parts), 200 parts of pure water, 0.001 part of ferrous sulfate, 0.004 parts of disodium tetraacetate, 0.2 parts of sodium formaldehydesulfoxylate, 16 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 1)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.8 parts of partially hydrogenated tallow fatty acid sodium, 47.7 parts of butadiene, 22.7 parts of styrene, and 0.07 parts of paramenthan hydroperoxide were added to a polymerization, container equipped with a stirrer, followed by polymerization, at 50°C for 4 hours. Thereafter, 29.6 parts of butadiene, 0.0015 parts of disodium ethylenediaminetetraacetate, 0.001 part of ferrous sulfate, and 0. 034 parts of fatty acid potassium monocarboxylate were further added thereto. Thus, a rubber latex (a) with a polymerization conversion rate of 99% and a weight-average particle size of 0.07 µm was prepared. 132 parts of the above described rubber latex (a) (solid contents: 44 parts), 200 parts of pure water, 0.001 part of ferrous sulfate, 0.004 parts of disodium ethylenediaminetetraacetate, 0.2 parts of sodium formaldehydesulfoxylate, 16 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 2)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 11.0 parts of divinylbenzene, 1.8 parts of partially hydrogenated tallow fatty acid sodium, 47.7 parts of butadiene, 22.7 parts of styrene, and 0.07 parts of paramenthan hydroperoxide were added to a polymerization container equipped with a stirrer, followed by polymerization at 50°C. Thereafter, 29.6 parts of butadiene, 0.0015 parts of disodium ethylenediaminetetraacetate, 0.001 part of ferrous sulfate, and 0.034 parts of fatty acid potassium monocarboxylate were further added thereto, followed by polymerization for 4 hours. Thus, a rubber latex (a) with a polymerization conversion rate of 99% and a weight-average particle size of 0.07 µm was prepared.

132 parts of the above described rubber latex (a) (solid contents: 44 parts), 200 parts of pure water, 0.001 part of ferrous sulfate, 0.004 parts of disodium ethylenediaminetetraacetate, 0.2 parts of sodium formaldehydesulfoxylate, 16 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 3)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 77.3 parts of butadiene, 22.7 parts of styrene, and 0.07 parts of paramenthan hydroperoxide were added to a polymerization container equipped with a stirrer, followed by polymerization at 50°C for 10 hours. Thus, a rubber latex with a polymerization conversion rate of 99% and a mean particle size of 0.07 µm was prepared.

132 parts of the above described rubber latex (solid contents: 44 parts), 200 parts of pure water, 0.001 part of ferrous sulfate, 0.004 parts of disodium ethylenediaminetetraacetate, 0.2 parts of sodium formaldehydesulfoxylate, 16 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact.resistance was 1.565.

### (Comparative example 4)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 38.4 parts of butadiene, 30.8 parts of styrene, and 0.07 parts of paramenthan hydroperoxide were added to a polymerization container equipped with a stirrer, followed by polymerization at 50°C for 4 hours. Thereafter, 30.8 parts of butadiene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization conversion rate of 99% and a weight-average particle size of 0.07 µm was prepared.

39 parts of the above described rubber latex (solid contents: 13 parts), 200 parts of pure water, 0.001 part of ferrous sulfate, 0.004 parts of disodium ethylenediaminetetraacetate, and 0.2 parts of sodium formaldehydesulfoxylate were added to a polymerization container equipped with a stirrer, and the temperature was increased to 60°C. Thereafter, a mixed solution consisting of 43 parts of styrene, 29 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 15 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 5)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 14.9 parts of butadiene, 33.3 parts of styrene, and 0.07 parts of paramenthan hydroperoxide were added to a polymerization container equipped with a stirrer, followed by polymerization at 50°C for 4 hours. Thereafter, 28.8 parts of butadiene, 23.0 parts of styrene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization conversion rate of 99% and a weight-average particle size of 0.07 µm was prepared.

261 parts of the above described rubber latex (solid contents: 87 parts), 200 parts of pure water, 0.001 part of ferrous sulfate, 0.004 parts of disodium ethylenediaminetetraacetate, and 0.2 parts of sodium formaldehydesulfoxylate were added to a polymerization container equipped with a stirrer, and the temperature was increased to 60°C. Thereafter, a mixed solution consisting of 8 parts of styrene, 1 part of hydroxyethyl methacrylate, and 0.16 parts of cumene hydroperoxide was continuously added to the reaction product over 1 hour, so as to prepare an inner layer shell. After completion of the polymerization of the inner layer shell, a mixed solution consisting of 4 parts of styrene and 0.2 parts of cumene hydroperoxide was continuously added thereto at 60°C over 4 hours, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 6)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 9.1 parts of butadiene, 4.6 parts of styrene, and 0.07 parts of paramenthan hydroperoxide were added to a polymerization container equipped with a stirrer, followed by polymerization at 50°C for 4 hours. Thereafter, 68.1 parts of butadiene, 18.2 parts of styrene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization conversion rate of 99% and a mean particle size of 0.07 µm was prepared.

132 parts of the above described rubber latex (solid contents: 44 parts), 200 parts of pure water, 0.001 part of ferrous sulfate, 0.004 parts of disodium ethylenediaminetetraacetate, 0.2 parts of sodium formaldehydesulfoxylate, 16 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 7)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 5.6 parts of butadiene, 34.6 parts of styrene, and 0.07 parts of paramenthan hydroperoxide were added to a polymerization container equipped with a stirrer, followed by polymerization at 50°C. Thereafter, 55.8 parts of butadiene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization conversion rate of 99% and a mean particle size of 0.07 µm was prepared.

156 parts of the above described rubber latex (solid contents: 52 parts), 200 parts of pure water, 0.001 part of ferrous sulfate, 0.004 parts of disodium ethylenediaminetetraacetate, 0.2 parts of sodium formaldehydesulfoxylate, 8 parts of styrene, and 0.09 parts of cumene hydroperoxide were added to a polymerization container equipped with a stirrer, followed by polymerization at 60°C for 1 hour. Thereafter, a mixed solution consisting of 30 parts of styrene, 5 parts of hydroxyethyl methacrylate, and 0.16 parts of cumene hydroperoxide was continuously added to the reaction product over 4 hours, so as to prepare an inner layer shell. After completion of the polymerization of the inner layer shell, a mixed solution consisting of 5 parts of styrene and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 8)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 55.8 parts of butadiene; and 0.07 parts of paramenthan hydroperoxide were added to a polymerization container equipped with a stirrer, followed by polymerization at 50°C for 4 hours. Thereafter, 9.6 parts of butadiene, 34.6 parts of styrene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization coversion rate of 99% and a weight-average particle size of 0.07 µm was prepared.

156 parts of the above described rubber latex (solid contents: 52 parts), 200 parts of pure water, 0.001 part of ferrous sulfate, 0.004 parts of disodium ethylenediaminetetraacetate, 0.2 parts of sodium formaldehydesulfoxylate, 8 parts of styrene, and 0.09 parts of cumene hydroperoxide were added to a polymerization container equipped with a stirrer, followed by polymerization at 60°C. Thereafter, a mixed solution consisting of 30 parts of styrene, 5 parts of hydroxyethyl methacrylate, and 0.16 parts of cumene hydroperoxide was continuously added to the reaction product, so as to prepare an inner layer shell. After completion of the polymerization of the inner layer shell, a mixed solution consisting of 5 parts of styrene and 0.2 parts of cumene hydroperoxide was continuously added thereto at 60°C, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

### (Comparative example 9)

200 parts of pure water, 0.4 parts of tripotassium phosphate, 0.2 parts of sodium salts of formalin naphthalenesulfonate condensate, 0.09 parts of sodium formaldehydesulfoxylate, 0.004 parts of disodium ethylenediaminetetraacetate, 0.002 parts of ferrous sulfate, 1.0 part of divinylbenzene, 1.8 parts of partially hydrogenated tallow fatty acid sodium, 3.3 parts of butadiene, 16.7 parts of styrene, and 0.07 parts of paramenthan hydroperoxide were added to a polymerization container equipped with a stirrer, followed by polymerization at 50°C for 4 hours. Thereafter, 53.3 parts of butadiene, 26.7 parts of styrene, 0.0015 parts of disodium ethylenediaminetetraacetate, 0.001 part of ferrous sulfate, and 0.034 parts of fatty acid potassium monocarboxylate were further added thereto, followed by polymerization for 5 hours. Thus, a rubber latex with a polymerization coversion rate of 99% and a mean particle size of 0.07 µm was prepared.

180 parts of the above described rubber latex (solid contents: 60 parts), 200 parts of pure water, 0.001 part of ferrous sulfate, 0.004 parts of disodium ethylenediaminetetraacetate, and 0.2 parts of sodium formaldehydesulfoxylate were added to a polymerization container equipped with a stirrer, and the temperature was increased to 60°C. Thereafter, a mixed solution consisting of 15 parts of styrene and 0.16 parts of cumene hydroperoxide was continuously added to the reaction product over 4 hours, so as to prepare an inner layer shell. After completion of the polymerization of the inner layer shell, a mixed solution consisting of 20 parts of styrene, 5 parts of hydroxyethyl methacrylate, and 0.2 parts of cumene hydroperoxide was continuously added thereto at 60°C over 1 hour, so as to prepare an outer layer shell. Thus, latex of a core-shell modifier for impact resistance was prepared. The obtained latex of a core-shell modifier for impact resistance was coagulated with hydrochloric acid, and the coagulated product was then subjected to heat treatment, washing, dehydration, and dried, so as to prepare a powdery core-shell modifier for impact resistance. The refractive index of the core-shell modifier for impact resistance was 1.565.

Results obtained by evaluating press products and sheets that were produced from amorphous polyester resin compositions produced using the core-shell modifier for impact resistance obtained in the above described examples and comparative examples are shown in Tables 1 and 2.

**Table 1**

| Impact resistance improving agents | Evaluation of physical properties of press products | | |
|---|---|---|---|
| | Total light transmission (%) | Clouding degree (%) | IZOD strength (kJ/m²) |
| None | 85 | 1.5 | 7 |
| Example 1 | 84 | 3.5 | 60 |
| Example 2 | 84 | 3.0 | 30 |
| Example 3 | 84 | 3.2 | 40 |
| Example 4 | 84 | 3.2 | 40 |
| Example 5 | 84 | 3.2 | 40 |
| Example 6 | 84 | 3.5 | 50 |
| Example 7 | 84 | 3.6 | 60 |
| | | | |
| Comparative Example 1 | 82 | 4.8 | 80 |
| Comparative Example 2 | 84 | 2.8 | 10 |
| Comparative Example 3 | 83 | 4.5 | 60 |
| Comparative Example 4 | 84 | 3.6 | 9 |
| Comparative Example | 79 | 6.8 | 15 |
| Comparative Example 6 | 83 | 4.2 | 50 |
| Comparative Example | 83 | 3.4 | 18 |
| Comparative Example 8 | 83 | 3.8 | 14 |
| Comparative Example 9 | 83 | 4.3 | 16 |

**Table 2**

| Impact resistance improving agents | Evaluation of physical properties of sheets | | |
|---|---|---|---|
| | Total light transmission (%) | Clouding degree (%) | Whitening L value |
| None | 90.9 | 0.5 | 38 |
| Example 1 | 90.7 | 1.9 | 40 |
| Example 2 | 90.7 | 1.6 | 39 |
| Example 3 | 90.7 | 1.8 | 39 |
| Example 4 | 90.7 | 1.8 | 39 |
| Example 5 | 90.7 | 1.8 | 39 |
| Example 6 | 90.7 | 1.9 | 40 |
| Example 7 | 90.7 | 1.9 | 46 |
| | | | |
| Comparative Example 1 | 90.3 | 2.4 | 52 |
| Comparative Example 2 | 90.8 | 1.4 | 39 |
| Comparative Example 3 | 90.5 | 2.3 | 43 |
| Comparative Example 4 | 90.7 | 2.0 | 39 |
| Comparative Example 5 | 89.1 | 3.2 | 55 |
| Comparative Example 6 | 90.6 | 2.2 | 42 |
| Comparative Example 7 | 90.7 | 1.9 | 40 |
| Comparative Example 8 | 90.5 | 2.0 | 43 |
| Comparative Example 9 | 90.4 | 2.2 | 43 |

The present invention provides an amorphous polyester resin composition, which exhibits excellent whitening properties at a low stress and is improved in impact resistance with little impair in the optical properties inherent in amorphous polyester resin. This amorphous polyester resin composition is industrially greatly useful, when it is used for sheets, films, etc.

## Claims

1. A substantially amorphous polyester resin composition, which comprises :
1 to 40 parts by weight of a core-shell modifier for impact resistance (1), which has a refractive index between 1.55 and 1.60, and 60 to 99 parts by weight of at least one aromatic polyester or co-polyester (2) [100 parts by weight of the sum of (1) and (2)], the core-shell modifier comprising 15 to 85 parts by weight of a core (A) obtained by copolymerizing 65% to 95% by weight of a butadiene monomer, 5% to 35% by weight of an aromatic vinyl monomer, 0% to 10% by weight of a vinyl monomer capable of copolymerizing with these monomers, and 0.01% to 5% by weight of a cross-linking monomer and 15 to 85 parts by weight of a shell (B) [100 parts by weight of the sum of (A) and (B)], wherein said core (A) comprises 10 to 50 parts by weight of an inner layer core (A-1) obtained by copolymerizing 25% to 100% by weight of a butadiene monomer, 0% to 75% by weight of an aromatic vinyl monomer, 0% to 40% by weight of a vinyl monomer capable of copolymerizing with these monomers, and 0.1% to 10% by weight of a cross-linking monomer, and 5 to 75 parts by weight of an outer layer core (A-2) obtained in the presence of the inner layer core (A-1) by copolymerizing 50% to 100% by weight of a butadiene monomer, 0% to 50% by weight of an aromatic vinyl monomer, 0% to 40% by weight of a vinyl monomer capable of copolymerizing with these monomers, and 0% to 2% by weight of a cross-linkingmonomer, and said shell (B) is obtained by copolymerizing one or more vinyl monomers (a mixture).

2. The substantially amorphous polyester resin composition according to claim 1, wherein, with regard to the core (A) in the core-shell modifier for impact resistance (1), the ratio of a cross-linking monomer in the inner layer core (A-1) is higher than that in the outer layer core (A-2).

3. The substantially amorphous polyester resin composition according to claim 1 or 2, wherein the core-shell modifier for impact resistance (1) has a refractive index between 1.55 and 1.60, and comprises 15 to 85 parts by weight of the core (A), and 15 to 85 parts by weight of the shell (B) obtained by copolymerizing 10 to 80 parts by weight of an inner layer shell (B-1) obtained by copolymerizing 60% to 98% by weight of an aromatic vinyl monomer, 2% to 40% by weight of (meth) acrylic ester monomer having a hydroxyl or alkoxy group, and 0% to 20% by weight of a vinyl monomer capable of copolymerizing with these monomers, and 5 to 20 parts by weight of an outermost layer shell (B-2) obtained by copolymerizing 50% to 100% by weight of an aromatic vinyl monomer and 0% to 50% by weight of a vinyl monomer capable of copolymerizing with these monomers [100 parts by weight of the sum of (A) and (B)].

4. The substantially amorphous polyester resin composition according to any of claims 1 to 3, wherein the amount of butadiene monomer when obtaining the inner layer core (A-1) is 25% to 90% .by weight.

5. The substantially amorphous polyester resin composition according to any of claims 1 to 4, wherein the amount of butadiene monomer when obtaining the core (A) is 65% to 90% by weight.

6. A molded product, which is produced from the composition according to any one of claims 1 to 5 under conditions where at least one aromatic polyester or co-polyester (2) is maintained in an amorphia form.

## Patentansprüche

1. Im Wesentlichen amorphe Polyesterharzzusammensetzung, umfassend:
1 bis 40 Gewichtsteile eines Kern-Mantel-Modifikators für Schlagfestigkeit (1), der einen Brechungsindex zwischen 1,55 und 1,60 aufweist, und 60 bis 99 Gewichtsteile von mindestens einem aromatischen Polyester oder Copolyester (2) [100 Gewichtsteile der Summe von (1) und (2)], wobei der Kern-Mantel-Modifikator 15 bis 85 Gewichtsteile eines Kerns (A), erhältlich durch Copolymerisation von 65 bis 95 Gew.-% eines Butadienmonomers, 5 bis 35 Gew.-% eines aromatischen Vinylmonomers, 0 bis 10 Gew.-% eines Vinylmonomers, welches zur Copolymerisation mit diesen Monomeren fähig ist, und 0,01 bis 5 Gew.-% eines vernetzenden Monomers, und 15 bis 85 Gewichtsteile eines Mantels (B) umfasst [100 Gewichtsteile der Summe von (A) und (B)], wobei der Kern (A) 10 bis 50 Gewichtsteile eines inneren Schichtkerns (A-1), erhältlich durch Copolymerisation von 25 bis 100 Gew.-% eines Butadienmonomers, 0 bis 75 Gew.-% eines aromatischen Vinylmonomers, 0 bis 40 Gew.-% eines Vinylmonomers, welches zur Copolymerisation mit diesen Monomeren fähig ist, und 0,1 bis 10 Gew.-% eines vernetzenden Monomers, und 5 bis 75 Gewichtsteile eines äußeren Schichtkerns (A-2) umfasst, welcher in Gegenwart des inneren Schichtkerns (A-1) durch Copolymerisation von 50 bis 100 Gew.-% eines Butadienmonomers, 0 bis 50 Gew.-% eines aromatischen Vinylmonomers, 0 bis 40 Gew.-% eines Vinylmonomers, welches zur Copolymerisation mit diesen Monomeren fähig ist, und 0 bis 2 Gew.-% eines vernetzenden Monomers erhalten wird, und der Mantel (B) durch Copolymerisation eines oder mehrerer Vinylmonomere (eines Gemischs) erhalten wird.

2. Im Wesentlichen amorphe Polyesterharzzusammensetzung gemäß Anspruch 1, wobei, in Bezug auf den Kern (A) im Kern-Mantel-Modifikator für Schlagfestigkeit (1), das Verhältnis eines vernetzenden Monomers im inneren Schichtkern (A-1) höher ist als das Verhältnis im äußeren Schichtkern (A-2).

3. Im Wesentlichen amorphe Polyesterharzzusammensetzung gemäß Anspruch 1 oder 2, wobei der Kern-Mantel-Modifikator für Schlagfestigkeit (1) einen Brechungsindex zwischen 1,55 und 1,60 aufweist und 15 bis 85 Gewichtsteile des Kerns (A) und 15 bis 85 Gewichtsteile des Mantels (B), erhältlich durch Copolymerisation von 10 bis 80 Gewichtsteilen eines inneren Schichtmantels (B-1), welcher durch Copolymerisation von 60 bis 98 Gew.-% eines aromatischen Vinylmonomers, 2 bis 40 Gew.-% eines (Meth)acrylesters mit einer Hydroxylgruppe oder einem Alkoxyrest und 0 bis 20 Gew.-% eines Vinylmonomers, welches zur Copolymerisation mit diesen Monomeren fähig ist, erhalten wird, und 5 bis 20 Gewichtsteilen eines äußersten Schichtmantels (B-2), welcher durch Copolymerisation von 50 bis 100 Gew.-% eines aromatischen Vinylmonomers und 0 bis 50 Gew.-% eines Vinylmonomers, welches zur Copolymerisation mit diesen Monomeren fähig ist [100 Gewichtsteile der Summe von (A) und (B)], erhalten wird, umfasst.

4. Im Wesentlichen amorphe Polyesterharzzusammensetzung gemäß einem der Ansprüche 1 bis 3, wobei die Menge an Butadienmonomer beim Erhalten des inneren Schichtkerns (A-1) 25 bis 90 Gew.-% beträgt.

5. Im Wesentlichen amorphe Polyesterharzzusammensetzung gemäß einem der Ansprüche 1 bis 4, wobei die Menge an Butadienmonomer beim Erhalten des Kerns (A) 65 bis 90 Gew.-% beträgt.

6. Formgegenstand, hergestellt aus einer Zusammensetzung gemäß einem der Ansprüche 1 bis 5 unter Bedingungen, bei denen mindestens ein aromatischer Polyester oder Copolyester (2) in amorpher Form beibehalten wird.

## Revendications

1. Composition de résine poly(ester) sensiblement amorphe, qui comprend :
de 1 à 40 parties en poids d'un modificateur de noyau-coquille pour une résistance aux chocs (1), qui a une indice de réfraction compris entre 1,55 et 1,60, et 60 à 99 parties en poids d'au moins un poly(ester) ou copoly(ester) aromatique (2) [100 parties en poids de la somme de (1) et (2)], le modificateur de noyau-coquille comprenant de 15 à 85 parties en poids d'un noyau (A) obtenu en copolymérisant 65 % à 95 % en poids d'un monomère de butadiène, 5 % à 35 % en poids d'un monomère de vinyle aromatique, 0 % à 10 % en poids d'un monomère de vinyle apte à copolymériser avec ces monomères, et 0,01 % à 5 % en poids d'un monomère de réticulation et 15 à 85 parties en poids d'une coquille (B) [100 parties en poids de la somme de (A) et (B)], dans laquelle ledit noyau (A) comprend 10 à 50 parties en poids d'un noyau de couche interne (A-1) obtenu en copolymérisant 25 % à 100 % en poids d'un monomère de butadiène, de 0 % à 75 % en poids d'un monomère de vinyle aromatique, 0 % à 40 % en poids d'un monomère de vinyle apte à copolymériser avec ces monomères, et 0,1 % à 10 % en poids d'un monomère de réticulation, et 5 à 75 parties en poids d'un noyau de couche externe (A-2) obtenu en présence du noyau de couche interne (A-1) en copolymérisant 50 % à 100 % en poids d'un monomère de butadiène, 0 % à 50 % en poids d'un monomère de vinyle aromatique, 0 % à 40 % en poids d'un monomère de vinyle apte à copolymériser avec ces monomères, et 0 % à 2 % en poids d'un monomère de réticulation, et ladite coquille (B) est obtenue en copolymérisant un ou plusieurs monomères de vinyle (un mélange).

2. Composition de résine poly(ester) sensiblement amorphe selon la revendication 1, dans laquelle, en ce qui concerne le noyau (A) dans le modificateur de noyau-coquille pour une résistance aux chocs (1), le rapport d'un monomère de réticulation dans le noyau de couche interne (A-1) est supérieur à celui dans le noyau de couche externe (A-2).

3. Composition de résine poly(ester) sensiblement amorphe selon la revendication 1 ou 2, dans laquelle le modificateur de noyau-coquille pour une résistance aux chocs (1) a un indice de réfraction compris entre 1,55 et 1,60, et comprend 15 à 85 parties en poids du noyau (A), et 15 à 85 parties en poids de la coquille (B) obtenu en copolymérisant 10 à 80 parties en poids d'une coquille de couche interne (B-1) obtenu en copolymérisant 60 % à 98 % en poids d'un monomère de vinyle aromatique, 2 % à 40 % en poids d'un monomère d'ester (méth)acrylique ayant un groupe hydroxyle ou alcoxy, et 0 % à 20 % en poids d'un monomère de vinyle apte à copolymériser avec ces monomères, et 5 à 20 parties en poids d'une coquille de couche la plus externe (B-2) obtenue en copolymérisant 50 % à 100 % en poids d'un monomère de vinyle aromatique et 0 % à 50 % en poids d'un monomère de vinyle apte à copolymériser avec ces monomères [100 parties en poids de la somme de (A) et (B)].

4. Composition de résine poly(ester) sensiblement amorphe selon l'une quelconque des revendications 1 à 3, dans laquelle la quantité de monomère de butadiène lors de l'obtention du noyau de couche interne (A-1) est de 25 % à 90 % en poids.

5. Composition de résine poly(ester) sensiblement amorphe selon l'une quelconque des revendications 1 à 4, dans laquelle la quantité de monomère de butadiène lors de l'obtention du noyau (A) est de 65 % à 90 % en poids.

6. Produit moulé, qui est produit à partir de la composition selon l'une quelconque des revendications 1 à 5, dans des conditions où au moins un poly(ester) ou copoly(ester) aromatique (2) est maintenu sous forme amorphe.
